# NEUE EUROPÄISCHE PATENTSCHRIFT

(11) **EP 1 545 902 B2**
(45) Veröffentlichungstag und Bekanntmachung des Hinweises auf die Entscheidung über den Einspruch: **24.02.2016**
(45) Hinweis auf die Patenterteilung: 23.07.2008
(21) Anmeldenummer: 03748062.1
(22) Anmeldetag: 18.09.2003
(51) Int. Cl.: B42D 25/00

(54) **SICHERHEITSPAPIER**
SECURITY PAPER
PAPIER DE SECURITE

(30) Priorität: 19.09.2002 DE 10243653
(43) Veröffentlichungstag der Anmeldung: 29.06.2005
(73) Patentinhaber: Giesecke & Devrient GmbH, 81667 München (DE)
(72) Erfinder: BURCHARD, Theo, 83703 Gmund/Tegernsee (DE); KELLER, Mario, 80799 München (DE); TAUBER, Reinhard, 83714 Miesbach (DE); SEIDLER, Rudolf, 83703 Gmund/Tegernsee (DE)
(74) Vertreter: Klunker . Schmitt-Nilson . Hirsch
(86) Internationale Anmeldenummer: PCT/EP2003/010427
(87) Internationale Veröffentlichungsnummer: WO 2004/028825

(56) Entgegenhaltungen:
- EP-A- 1 152 369
- EP-A- 1 174 278
- WO-A-02/02350
- WO-A-96/28610
- WO-A-98/14661
- WO-A-03/029003
- AU-B2- 488 652
- US-A- 5 449 200
- US-A- 5 868 902
- RUDOLF L VAN RENESSE: 'Optical Document Security', ARTECH HOUSE, INC vol. 'pages:317-334', Seiten 95 - 110

## Beschreibung

Die Erfindung betrifft ein Sicherheitspapier zur Herstellung von Wertdokumenten, wie Banknoten oder dergleichen, das aus einem knitterbaren, mehrschichtigen Substrat, umfassend mindestens eine Papierschicht und mindesten eine Folie, besteht, sowie ein Verfahren zur Herstellung eines derartigen Sicherheitspapiers.

Wertdokumente im Sinne der Erfindung sind Banknoten, Scheckformulare, Aktien, Urkunden, Briefmarken, Flugscheine, Etiketten für die Produktsicherung und Ähnliches. Die vereinfachende Benennung "Sicherheitspapier" oder "Wertdokument" schließt deshalb im Folgenden stets Dokumente der genannten Art ein.

Banknoten werden üblicherweise aus so genannten Sicherheitspapieren gefertigt, die aus Baumwollfasern bestehen und besondere Sicherheitsmerkmale, wie einen zumindest teilweise in das Papier eingearbeiteten Sicherheitsfaden und ein Wasserzeichen, aufweisen. Die Umlaufdauer einer Banknote hängt von der Beanspruchung ab. Bestimmte Stückelungen werden im Handel bevorzugt benutzt und weisen damit aufgrund der stärkeren Belastung durch Umwelteinflüsse eine geringere Umlaufzeit auf. Als Hauptursache für die eingeschränkte Umlaufzeit von Banknoten gilt die frühzeitige Verschmutzung. Da Banknotenpapier sehr porös ist, besitzt es eine große Oberfläche bzw. eine hohe Oberflächenrauigkeit. Auch wenn die hieraus resultierenden Vorsprünge und Hohlräume in Größenordnungen liegen, die vom menschlichen Auge nicht mehr aufgelöst werden können, so bieten sie doch im Vergleich zu einer glatten Oberfläche ideale Verhältnisse für Schmutzablagerungen.

In der WO 98/15418 wurde daher bereits vorgeschlagen, Banknoten vollständig aus einem Kunststoffsubstrat zu fertigen. Allerdings muss in diesem Fall auf die üblichen und bewährten Sicherheitselemente, wie Portrait-Wasserzeichen und Fenstersicherheitsfaden, verzichtet werden, ebenso wie auf die besonderen Eigenschaften, wie Klang und Griffigkeit des Banknotenpapiers. Auch die im Banknotenbereich übliche Bedruckung im Stahltiefdruck, der aufgrund des durch den Farbauftrag entstehenden Reliefs als zusätzliches taktiles Echtheitskennzeichen dient, führt auf Kunststoffsubstraten lediglich zu einem flachen, kaum spürbaren Relief. Zudem sind reine Kunststoffbanknoten stark hitzeempfindlich, so dass gerade in Ländern mit klimatisch ungünstigen Bedingungen die Kunststoffsubstrate stark zur Schrumpfung neigen. Insbesondere im Hinblick auf die Fälschungssicherheit weisen Plastikbanknoten den entscheidenden Nachteil auf, dass das Substrat leicht verfügbar ist und für jedermann erhältlich ist.

In der WO96/28610 wurde als Alternative eine Lackierung, d.h. eine Beschichtung der Papierbanknoten, vorgeschlagen. Die Beschichtung wird in flüssiger form auf das zu beschichtende Papiersubstrat aufgebracht. Zwar wird somit die Verschmutzungsproblematik verringert, allerdings kann die mechanische Stabilität eines Substrates so nicht erhöht werden.

Auch Mehrschichtsubstrate aus einem Folienkern, der beidseitig mit Papierlagen beschichtet ist, wurden bereits vorgeschlagen. Im Vergleich zum reinen Papiersubstrat ist die Festigkeit dieses Verbundes zwar erhöht, aber die Verschmutzungsproblematik mit den außen liegenden Papierschichten ist nicht gelöst. Um die Gesamtdicke derartiger Banknoten nicht übermäßig zu erhöhen, müssen die Papierlagen zudem sehr dünn ausgestaltet sein, so dass die üblichen Sicherheitsmerkmale wie Sicherheitsfaden oder Wasserzeichen nicht mehr optimal eingebracht werden können.

Die Aufgabe der Erfindung besteht daher darin, ein Sicherheitspapier herzustellen, das Schmutz abweisend ist, eine erhöhte mechanische Festigkeit und daher eine hohe Umlaufdauer aufweist, und das eine erhöhte Fälschungssicherheit aufweist.

Die Lösung dieser Aufgabe ergibt sich aus dem unabhängigen Anspruch. Weiterbildungen sind Gegenstand von Unteransprüchen.

Gemäß der Erfindung besteht das Sicherheitspapier aus einem knitterbaren mehrschichtigen Substrat, das zumindest eine Papierschicht und eine Folie umfasst, wobei die Folie mit mindestens einem Sicherheitsmerkmal ausgestattet ist.

Bei dem mehrschichtigen Substrat handelt es sich um ein knitterbares Gebilde, das die Knick- und Falteigenschaften eines Blattes aufweist und nicht, wie eine Karte, starr und nur geringfügig biegsam ist. Insbesondere soll das Substrat die Griffigkeit und den Klang von Papier so weit wie möglich aufweisen.

Das Substrat besteht aus einer Papierschicht, die beidseitig mit Folie beschichtet ist, die eine Dicke von 1 bis 15 µm aufweist und mit wenigstens einem Sicherheitsmerkmal ausgesttet ist. Die Papierschicht ist nicht zwangsläufig vollflächig ausgebildet. Um die Schutzeigenschaften der Folie zu maximieren, deckt die Folie die Papierschicht vollflächig ab.

D.h. das Substrat weist einen Papierkern auf, dessen Oberflächen vollflächig mit Folie abgedeckt sind.

An die Art der Papierschicht sind keine Bedingungen geknüpft, so dass übliche Papiere aus Fasern von Einjahrespflanzen, insbesondere Baumwollfasern oder Zellstofffasern, verwendet werden können, aber auch Papiere, die zumindest teilweise aus Kunststofffasern, vorzugsweise Polyamidfasern, bestehen.

Die Papierschicht weist üblicherweise ein Gewicht von 50 bis 100 g/m² auf, vorzugsweise von 80 bis 90 g/m². Selbstverständlich kann je nach Anwendungsweise jedes geeignete Gewicht eingesetzt werden.

Die Papierschicht kann einlagig wie auch mehrlagig verarbeitet werden. Bei mehrlagigen Papierschichten können die Papierschichten aus gleichen oder unterschiedlichen Papiersorten bestehen. Im Folgenden wird unter Papierschicht sowohl die einwie auch die mehrlagige Variante verstanden.

Des Weiteren besteht auch die Möglichkeit die Papierschicht vollflächig oder als einzelne Teilflächen zu verarbeiten. Z. B. kann eine Folie eine unterbrochene Papierschicht oder mehrere separate Papierteilflächen abdecken.

Vorzugsweise wird die Papierschicht auf einer Rundsiebmaschine hergestellt.

Die Papierschicht kann zusätzlich mit Sicherheitsmerkmalen ausgestattet werden, um das Nachstellen des Sicherheitspapieres zu erschweren.

Dabei können die Sicherheitsmerkmale auf die Papierschicht aufgebracht wie auch in das Volumen der Papierschicht eingebracht werden.

Will man die Sicherheitsmerkmale in das Volumen des Sicherheitspapiers einbringen, werden die in Betracht kommenden Merkmale vorzugsweise bereits bei der Papierherstellung in die Papiermasse eingebracht.

Als klassisches Sicherheitsmerkmal wird insbesondere ein Wasserzeichen in die Papierschicht eingearbeitet. Alternativ oder auch zusätzlich können auch Sicherheitsfäden in das Papier eingearbeitet werden. Als besonders geeignet zur Verbesserung der Sicherheit ist ein so genannter Fenstersicherheitsfaden zu betrachten, der auf der Vorder- und/ oder Rückseite der Papierschicht erscheint. Denkbar ist auch, dass der Sicherheitsfaden so in den Verbund eingearbeitet wird, dass er im Ganzen sichtbar zwischen der Papierschicht und der Folie zu liegen kommt. Dieser Sicherheitsfaden wird beispielsweise während der Herstellung des Verbundes eingebracht und kann auf der Papierlage durch Verbundkleber und die Folie fixiert werden.

Bei einem in das Papiervolumen eingebrachten Sicherheitsmerkmal kann es sich um einen Merkmalsstoff mit einer visuell und/oder maschinell nachweisbaren physikalischen Eigenschaft handeln. Der Stoff kann beispielsweise magnetische, elektrisch leitfähige, lumineszierende, lichtbeugende, lichtpolarisierende, photochrome, thermochrome oder lichtinterferierende Eigenschaften aufweisen und kann vollflächig gleichmäßig verteilt vorliegen oder in Form von Mustern eingebracht werden. Bei den lumineszierenden Merkmalsstoffen kann es sich beispielsweise um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich, emittierende Lumineszenzstoffe verwendet werden.

Neben den in das Volumen eingebrachten Sicherheitsmerkmalen lassen sich Sicherheitsmerkmale auch auf die Papieroberfläche vorzugsweise als Aufdruck aufbringen. Dabei kann eine Seite, aber selbstverständlich auch beide Oberflächen der Papierschicht mit Sicherheitsmerkmalen ausgerüstet werden.

Hierbei kann es sich zum einen um die oben angesprochenen visuell und/ oder maschinell detektierbaren Sicherheitsmerkmale handeln. Zum anderen eignet sich besonders der Stichtiefdruck, der beim Druckvorgang ein typisches Relief auf dem Bedruckstoff erzeugt, das leicht ertastbar ist. Bei Beschichtung mit einer möglichst dünnen Folie ist das Relief im Papier trotz Folie ertastbar. Der Stichtiefdruck kann farbführend und/oder als Blindprägung ausgeführt sein.

Ebenso können optisch variable Sicherheitselemente auf dem Papier vorgesehen werden. Optisch variable Elemente bzw. Druckfarben, die aufgrund von Lichtbeugung oder -interferenz ein betrachtungswinkelabhängiges Farbspiel zeigen, benötigen für eine gute Sichtbarkeit dieses Effekts einen möglichst glatten Untergrund, so dass bei Anwendung auf Papier dieses oftmals erst mit einer Primerschicht vorbehandelt werden muss. Sicherheitselemente dieser Art sind beispielsweise Hologramme, Kinegrame^{®} oder andere Beugungsstrukturen, folienartige Flüssigkristall- oder Interferenzschichtaufbauten, aber auch Druckfarben, die Interferenzschicht- oder Flüssigkristallpigmente oder andere Effektpigmente, wie glänzende Metalleffektfarbpigmente, enthalten. Auch einfache Metallschichten oder Metalleffektaufdrucke sind denkbar.

Die auf mindestens eine Oberfläche des Papiers aufgebrachten Sicherheitsmerkmale können auch in Form einer Codierung vorliegen. Dies bietet sich insbesondere bei aufgedruckten Sicherheitselementen an.

Durch die Verwendung mehrerer Merkmalsstoffe und/oder eine Variation der Konzentration eines oder mehrerer Merkmalsstoffe in entsprechenden Druckfarben können sehr einfach beliebige Codierungen, beispielsweise in Form eines Barcodes, auf dem Sicherheitspapier erzeugt werden. Diese Codierung kann beispielsweise ein eigenständiges zusätzliches Sicherheitsmerkmal darstellen oder als Vergleichsmerkmal für andere bereits auf dem Sicherheitspapier vorgesehene Daten dienen. So können auf der Banknote visuell sichtbare Informationen, wie beispielsweise die Denomination, der Name einer im Portrait dargestellten Person oder dergleichen, verschlüsselt und in Form der Codierung für das Auge unsichtbar auf dem Papier abgelegt werden. Bei einer maschinellen Überprüfung wird die Codierung gelesen, entschlüsselt und mit der entsprechenden, visuell sichtbaren Information auf Identität geprüft.

Weiterhin besteht die Möglichkeit, mittels Laser Informationen in das Papier einzuschreiben. Je nach Intensität der Laserenergie können unterschiedliche graue, braune und schwarze Schattierungen erzeugt werden, mit denen insbesondere Portraits dargestellt werden können. Alternativ sind auch Mikroschriftzüge, bei denen die einzelnen Buchstaben maximale Abmessungen von 100 µm aufweisen, machbar.

Die zumindest teilweise Abdeckung der Papierschicht mit einer Folie verhindert den offenen Zugriff auf die Sicherheitsmerkmale, die in oder auf die Papierschicht ein- bzw. aufgebracht sind, so dass die Fälschungssicherheit erheblich erhöht wird.

Dabei werden beide Oberflächen mit Folie ausgestattet. Dabei wird die Papierschicht vollständig von der Folie abgedeckt, um einen optimalen Oberflächenschutz zu erreichen.

Bei der Folie handelt es sich um eine Kunststofffolie, vorzugsweise aus Polyethylenterephthalat PET oder orientiertem Polypropylen OPP. Selbstverständlich ist auch jedes andere geeignete Kunststoffsubstrat einsetzbar. Je nach Anwendung können die Folien mattiert oder glänzend ausgeführt sein. Eine spezielle Variante des Matt-/Glanz-Effektes auf einer Folie kann z.B. dadurch erzeugt werden, dass eine glänzende Folie in bestimmten Bereichen mit einem Resistlack beschichtet wird, dann eine Ätzung der Folienoberfläche erfolgt und anschließend der Resistlack entfernt wird. Im Bereich des ursprünglich aufgebrachten Resistlackes ist die Folie weiterhin glänzend, während in den Bereichen ohne Resistlack die Oberfläche angeätzt und daher matt erscheint.

Die Folie weist eine Dicke von 1 bis 15 µm, besonders bevorzugt 6 bis 15 µm auf. Je nach Anwendung können auch Folien von lediglich 6 µm Dicke eingesetzt werden. In diesem Fall können die typischen Eigenschaften eines Papierblattes, wie Knitterfähigkeit und Faltbarkeit, besonders gut zur Geltung kommen.

Die Folien dienen unter anderem der Verbesserung der mechanischen Festigkeit des Sicherheitspapieres. Um diese weiter zu steigern, insbesondere auch um die Einreißfähigkeit zu verbessern, können die eingesetzten Folien unterschiedliche Reckung aufweisen. Insbesondere die auf unterschiedlichen Seiten der Papierschicht aufgebrachten Folien erhöhen deutlich den Einreißwiderstand, wenn sie unterschiedliche Reckung aufweisen.

Neben der Fähigkeit, die mechanische Stabilität und Schmutzabweisung eines Sicherheitspapieres zu erhöhen, können die Folien bei entsprechender Ausrüstung mit Sicherheitsmerkmalen auch entscheidend zu einer verbesserten Fälschungssicherheit beitragen.

Die Folien lassen sich wie auch die Papierschicht mit Sicherheitsmerkmalen ausrüsten, die auf die Folienoberfläche auf und/oder in das Volumen der Folie eingebracht werden.

Bei einem in das Folienvolumen eingebrachten Sicherheitsmerkmal kann es sich um einen Merkmalsstoff mit einer visuell und/oder maschinell nachweisbaren physikalischen Eigenschaft handeln. Der Stoff kann beispielsweise magnetische, elektrisch leitfähige, lumineszierende, lichtbeugende, lichtpolarisierende, photochrome, thermochrome oder lichtinterferierende Eigenschaften aufweisen und kann vollflächig gleichmäßig verteilt vorliegen oder in Form von Mustern eingebracht werden. Bei den lumineszierenden Zusatzstoffen kann es sich beispielsweise um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich emittierende Lumineszenzstoffe verwendet werden.

Bei auf die Oberfläche der Folie aufgebrachten Sicherheitsmerkmalen kann das Sicherheitsmerkmal dabei auf der dem Papier abgewandten Seite und/ oder dem Papier zugewandten Seite zu liegen kommen. Bei einem Dreischichtsubstrat würde demnach das Sicherheitsmerkmal auf einer Oberfläche der Folie entweder auf der Außenseite des Substrates oder auf der Innenseite vorliegen. Insbesondere Sicherheitsmerkmale, die einen weniger festen Verbund mit der Folie eingehen, kommen vorzugsweise auf der Innenseite des Verbundes zu liegen, so dass die schlechte Zugänglichkeit eine Fälschung erschwert.

Bei den auf die Oberfläche der Folie aufgebrachten Sicherheitsmerkmalen kann es sich um die oben angesprochenen visuell und/oder maschinell detektierbaren Sicherheitsmerkmale handeln.

Ebenso können optisch variable Sicherheitselemente auf der Folie vorgesehen werden. Optisch variable Elemente bzw. Druckfarben, die aufgrund von Lichtbeugung oder -interferenz ein betrachtungswinkelabhängiges Farbspiel zeigen, benötigen für eine gute Sichtbarkeit dieses Effekts einen möglichst glatten Untergrund, wie ihn insbesondere Folien bieten. Sicherheitselemente dieser Art sind beispielsweise Hologramme, Kinegrame^{®} oder andere Beugungsstrukturen, folienartige Flüssigkristall- oder Interferenzschichtaufbauten, aber auch Druckfarben, die Interferenzschicht- oder Flüssigkristallpigmente oder andere Effektpigmente, wie glänzende Metalleffektfarbpigmente, enthalten. Auch einfache Metallschichten oder Metalleffektaufdrucke sind denkbar.

Die auf der Folie aufgebrachten Sicherheitsmerkmale können auch in Form einer Codierung vorliegen, wie sie bereits ausführlich in Zusammenhang mit der Papierschicht beschrieben ist.

Als Sicherheitsmerkmal, das auf die Oberfläche der Folie aufgebracht werden kann, dient z.B. auch ein spezieller Aufdruck.

Insbesondere eignet sich als spezieller Aufdruck der Stichtiefdruck, bei dem eine leicht ertastbare Reliefoberfläche erzeugt wird. Der Druck kann dabei zum einen auf das fertig kaschierte mehrschichtige Substrat erfolgen, so dass der fertig laminierte Verbund somit wie ein konventionelles Sicherheitspapier verarbeitet und bedruckt werden kann. Der Stichtiefdruck kann farbführend und/oder als Blindprägung ausgeführt werden.

Zum anderen kann die Folie, noch bevor sie in den Verband eingearbeitet wird, separat bedruckt werden und erst nach dem Druckvorgang auf die Papierschicht aufgebracht werden.

Wie im Zusammenhang mit der Papierschicht ausgeführt, können auch in die Folie Informationen mittels Laser eingeschrieben werden.

Aus den optisch variablen Elementen bzw. Druckfarben eignen sich insbesondere Metallisierungen der Folie, eventuell in Kombination mit Beugungsstrukturen. Die Metallisierung kann dabei opak oder semitransparent ausgeführt sein, wobei die Semitransparenz durch sehr dünne Metallschichten oder durch Rasterung der Metallschicht erreicht wird. Unter "Semitransparenz" ist hierbei Transluzenz zu verstehen, d.h. die Metallisierung weist üblicherweise eine Lichtdurchlässigkeit von unter 90 %, vorzugsweise zwischen 80 % und 20 % auf. Weiterhin besteht die Möglichkeit, unterschiedlich farbige Metallisierungen zu verwenden bzw. zu kombinieren. Insbesondere eignet sich zur Metallisierung Aluminium und/oder Kupfer. Die auf die Folie direkt aufgebrachte Metallisierung zeigt den entscheidenden Vorteil außergewöhnlich hoher Brillanz. Dies ist auf die äußerst glatte Oberfläche der Folie zurückzuführen, die besonders gerichtete Reflexionen im Sicherheitsmerkmal zulässt. Im Gegensatz hierzu wirken derartige Metallisierungen auf Papier immer trüber, da die Unebenheiten im Papier Störungen bei der Reflexion verursachen.

Diese hochreflektierenden Metallisierungen der Folie werden vorzugsweise nur partiell mit dem so genannten Waschverfahren, wie in der WO 99/13157 beschrieben, erzeugt, auf die ausdrücklich Bezug genommen wird.

Werden die Metallisierungen zusätzlich mit z.B. geprägten Beugungsstrukturen versehen, ergeben sich außergewöhnlich brillante holographische Effekte, die auf herkömmliche Art nicht zu erzeugen sind.

Besonders fälschungssicher sind derartige Sicherheitsmerkmale wenn die Folie auf das Papier so aufgebracht wird, dass die Sicherheitsmerkmale auf der Innenseite des Laminats zu liegen kommen und so von außen nicht zugänglich sind.

In einer weiteren bevorzugten Ausführungsform wird die Folie zumindest teilweise mit einer Mikroperforation versehen, so dass es vorzugsweise zur Zerstörung der Folie bei mechanischen Manipulationen kommt. Die Mikroperforation ist insbesondere im Schichtverbund im Wesentlichen nicht sichtbar. Die Perforation kann nur in einem Teilbereich der Folie vorgesehen sein, aber sich auch über die ganze Folienfläche erstrecken. Selbstverständlich kann jedes Muster mittels der Perforation erzeugt werden, vorzugsweise werden perforierte Linien eingesetzt, die bei Manipulationsversuchen die Folie besonders leicht einreißen lassen. Alternativ können statt der Linien auch Informationen, z.B. Buchstaben oder Portraits, perforiert werden.

Die Perforationen werden vorzugsweise vor Aufkaschieren der Folie auf die Papierschicht in die Folie eingebracht. Das hat den Vorteil, dass beim Kaschieren Lufteinschlüsse und somit Falten und Verwerfungen der Folie vermieden werden. Die Perforation kann mittels beheizbarer Nadelwalzen realisiert werden, wobei hierbei Löcher in der Größenordnung von einigen µm entstehen. Perforationen wesentlich kleinerer Dimensionen, nämlich von maximal 1 µm Durchmesser, lassen sich durch Laser- oder Corona-Behandlung erzielen. Denkbar ist auch scharfkantiges Prägen zur Erzeugung von Perforationen.

In einer weiteren Variante können die Perforationen auch auf die bereits auf die Papierschicht aufgebrachte Folie eingebracht werden. Gegebenenfalls kann die Perforation noch zusätzlich in der Papierschicht vorliegen.

Die Form der erzeugten Löcher ist beliebig und kann beispielsweise kreisförmige oder linienförmige Abmessungen aufweisen.

Die Folie kann auf die Papierschicht mit verschiedenen Verfahren aufgebracht werden, wie beispielsweise Extrusion der Folie direkt auf die Papierbahn oder Kaschieren.

Die Folien werden auf die Papierlage vorzugweise kaltkaschiert. Hierbei wird ein Kleber auf die Folie aufgebracht, angetrocknet und gegebenenfalls durch Temperaturen von vorzugsweise maximal 80 bis 90°C aktiviert. Die Folie wird insbesondere nicht angeschmolzen oder durch Hitze übermäßig belastet. Dies hat den Vorteil, dass eventuell vorhandene Reckungen der Folien nicht zerstört werden, sondern auch nach dem Kaschieren noch vorhanden sind.

Die Laminierung vorzugsweise über Kaltkaschierung sorgt für einen festen, untrennbaren Verbund zwischen Papier und Abdeckschicht.

Der Kaschiervorgang erfolgt über Rollenkaschierung, so dass auch sehr dünne Folien mit einer Dicke von wenigen µm ohne Probleme, wie Blasen oder Verwerfungen, auf die Papierschicht aufkaschiert werden können.

Die Auswahl der Sicherheitsmerkmale des Papieres oder der Folie und auch deren Kombination ist uneingeschränkt möglich.

Die Papierschicht und die Folie werden vorzugsweise mit einem Kleber untrennbar miteinander verbunden. Vorzugsweise handelt es sich bei dem Kleber um einen wasser- oder UV-vernetzenden Kleber. Besonders bevorzugt wird ein Nasskleber, insbesondere ein Polyurethankleber, eingesetzt.

Der Kleber kann auch in sehr großen Mengen verarbeitet werden, ohne die Eigenschaften des Verbundes zu schädigen. Die Verarbeitung großer Mengen weist den Vorteil auf, dass Sicherheitsmerkmale sehr leicht und in ausreichender Menge in den Kleber eingearbeitet werden können.

Vorzugsweise wird der Kleber in Mengen von 6 bis 9 g/m² und Seite Papier oder Folie aufgebracht.

Wie auch Papierschicht und Folie kann der Kleber mit Sicherheitsmerkmalen ausgerüstet werden. Hier bieten sich die Sicherheitsmerkmale an, wie sie auch in das Volumen des Papier bzw. der Folie eingebracht werden können. Bei den Sicherheitsmerkmalen kann es sich um Merkmalsstoffe mit einer visuell und/oder maschinell nachweisbaren physikalischen Eigenschaft handeln. Die Stoffe können beispielsweise magnetische, elektrisch leitfähige, lumineszierende, lichtbeugende, lichtpolarisierende, photochrome, thermochrome oder lichtinterferierende Eigenschaften aufweisen und können vollflächig gleichmäßig verteilt vorliegen oder in Form von Mustern eingebracht werden. Besonders eignen sich Fluoreszenzstoffe oder so genannte Colorshift-Flakes mit Dünnschichtaufbau.

Die Kleberschicht kann je nach Anwendungsfall in ihren optischen Eigenschaften variiert werden. Z. B. kann der Kleber transparent bis opak ausgeführt sein. Des Weiteren ist es auch möglich, die Farbe des Klebers dem Anwendungsfall anzupassen.

Der Kleber kann sowohl einlagig als auch mehrlagig aufgebracht werden. Vorzugsweise wird die Folie mit dem Kleber ausgestattet und dann die mit Kleber beschichtete Folie auf die Papierschicht aufgebracht. Die Kleberschichten können sowohl vollflächig wie auch abschnittsweise verarbeitet werden, solange ein fester Verbund im Laminat erreicht wird.

So kann z.B. die erste Kleberschicht mit einem ersten Merkmalsstoff vollflächig auf die Folie aufgebracht werden, während eine zweite Kleberschicht mit einem zweiten Merkmalsstoff nur abschnittsweise z.B. in Form einer Codierung auf die erste Kleberschicht aufgebracht wird. Ebenso gut können sich die in unterschiedliche Kleberschichten eingebrachten Einzelinformationen zu einer Gesamtinformation ergänzen.

Alternativ können auch verschiedenfarbige Kleber verarbeitet werden, so dass die Kleberschicht in einem so ausgestatteten Wertdokument einen Regenbogenverlauf aufweist. Ein derartiger Regenbogenverlauf kann z.B. im Tiefdruck mit drei unterschiedlich eingefärbten Zylindern erzeugt werden.

Der Kleber wirkt sich zudem auch vorteilhaft auf andere Sicherheitselemente aus, insbesondere auf das optische Erscheinungsbild von Wasserzeichen und Sicherheitsfäden in der Papierschicht. Der Kontrast in den Hell-/Dunkelbereichen des Wasserzeichens tritt wesentlich deutlicher in Erscheinung im Vergleich zu konventionellen Wasserzeichen in unbeschichtetem Papier. Auch die üblicherweise verwendeten Aussparungen in den metallischen Beschichtungen von Sicherheitsfäden sind deutlich einfacher im Durchlicht zu erkennen.

Dieser kontrastverstärkende Effekt ist möglicherweise darauf zurückzuführen, dass der in die Papierschicht eindringende Kleber den Brechungsindex verändert. Hierbei handelt es sich lediglich um einen Erklärungsversuch und nicht um eine wissenschaftlich bestätigte Tatsache.

Da eine Ausstattung von Papier und/oder Folie und/oder Kleber mit Sicherheitsmerkmalen möglich ist, besteht auch die Möglichkeit, die in den einzelnen Schichten vorliegenden Sicherheitsmerkmale so zu kombinieren, dass sich diese zu einer Gesamtinformation ergänzen oder aber auch registerhaltig zueinander eingebracht sind. Ebenso können sich z.B. besondere farbliche Effekte ergeben.

So können Teile einer Codierung, wie z.B. ein Teil der Balken eines Balkencodes, auf die Papierschicht aufgedruckt sein und der andere Teil in das Volumen der Folie eingebracht sein. Ebenso gut können Schriftzüge oder Bildinformation in einzelne Bereich aufgeteilt werden, wobei die einzelnen Bereiche in unterschiedliche Schichten, eventuell sogar mit unterschiedlichen Sicherheitsmerkmalen, eingebracht sind.

In einer speziellen Variante kann die Ergänzung von Sicherheitsmerkmalen in verschiedenen Schichten zu einer Gesamtinformation auch zur Selbstauthentifizierung genutzt werden. Insbesondere bei den Ausführungsformen, bei denen die Folie und die Papierschicht nicht vollständig überlappen, kann z.B. die Folie und die Papierschicht jeweils mit einem bestimmten Druckmuster versehen sein, die sich bei Überlagerung zu einem Gesamtmuster ergänzen.

Durch Überlagerung von Wasserzeichen in der Papierbahn mit farbigen Folien lassen sich so auch farbig erscheinende Wasserzeichen erzeugen.

Wasserzeichen im Papier können auch mit der oben beschriebenen Metallisierung kombiniert werden. Verwendet man Wasserzeichen mit besonders hellen Stellen, so genannte Highlight-Wasserzeichen, und überlagert diese z.B. mit einem semitransparenten Metallstreifen, der sich auf der Folie befindet, kann in Aufsicht nur der Metallstreifen, in Durchsicht aber das Wasserzeichen durch das Metall hindurch erkannt werden. Diese Aufsicht-/Durchlichteffekte eignen sich insbesondere als leicht erkennbare Humanmerkmale.

Das vorliegende knitterbare mehrschichtige Substrat umgeht die im Stand der Technik genannten Nachteile. Insbesondere vereinigt das Substrat durch Kombination von Papier und Folie die positiven Eigenschaften dieser beiden Substrattypen. Zum einen sind die mechanische Festigkeit und Dimensionsstabilität des Substrates gewährleistet. Schrumpfungen der Folie sind mit Hilfe der Papierschicht ausgeschlossen, während das Papier durch die Folie einen zusätzlichen Halt erfährt. Insbesondere die Einreißfestigkeit wird deutlich verbessert. Eine genau Anpassung von Papierschicht, Folie und Kleber gewährleistet zudem einen festen Zusammenhalt der einzelnen Schichten, so dass die Spaltbarkeit deutlich reduziert oder sogar unmöglich wird. Andererseits verhindert die Folie eine überstarke Verschmutzung der Papieroberfläche, so dass die Umlaufdauer erhöht wird. Die Folienbeschichtung führt zudem zu einer erhöhten Fälschungssicherheit, da die Sicherheitsmerkmale im Papier, aber auch zum Teil die Sicherheitsmerkmale in der Folie im Innern des Substrates zum Liegen kommen und damit von außen nicht mehr zugänglich sind und gegebenenfalls auch in komplexer Beziehung zueinander angeordnet sind. Weiterhin führt die Beschichtung des Papiers mit Kleber und Folie zu einer verbesserten Qualität einzelner Sicherheitsmerkmale, wie anhand des Wasserzeichens und des Sicherheitsfadens oben erläutert. Trotz der vielen auf den Folieneigenschaften beruhenden Vorteile muss auf die durch das Papier eingebrachten Vorteile nicht verzichtet werden. So bleiben trotz Folienbeschichtung die üblicherweise bei Sicherheitspapier gewünschten Eigenschaften Griffigkeit und Klang weitgehend unverändert.

Weitere Vorteile und Ausführungsformen werden anhand der Figuren näher erläutert. Es wird darauf hingewiesen, dass die Figuren lediglich schematisch den Schichtaufbau des erfindungsgemäßen Sicherheitspapiers darstellen. Die in den Figuren gezeigten Proportionen entsprechen nicht unbedingt den in der Realität vorliegenden Verhältnissen und dienen vornehmlich zur Verbesserung der Anschaulichkeit. Dabei zeigt
- Fig.1: ein erfindungsgemäßes Sicherheitspapier in Aufsicht,
- Fig. 2: einen Schnitt entlang A - B durch das erfindungsgemäße Sicherheitspapier gemäß Fig.1,
- Fig. 3: eine weitere Ausführungsform eines erfindungsgemäßen Sicherheitspapiers in Aufsicht,
- Fig. 4: den Querschnitt entlang A - B durch das erfindungsgemäße Sicherheitspapier gemäß Fig. 3.
- Fig. 5: eine weitere Ausführungsform eines erfindungsgemäßen Sicherheitspapiers in Aufsicht,
- Fig. 6: den Querschnitt entlang A - B durch das erfindungsgemäße Sicherheitspapier gemäß Fig. 5,
- Fig. 7: eine weitere Ausführungsform eines erfindungsgemäßen Sicherheitspapiers in Aufsicht,
- Fig. 8: den Querschnitt entlang A - B durch das erfindungsgemäße Sicherheitspapier gemäß Fig. 7,
- Fig. 9: eine weitere Ausführungsform eines erfindungsgemäßen Sicherheitspapieres in Aufsicht,
- Fig. 10: die Seitenansicht der Ausführungsform gemäß Fig. 9,
- Fig.11: einen Querschnitt durch ein nicht erfindungsgemäßen Sicherheitspapier.

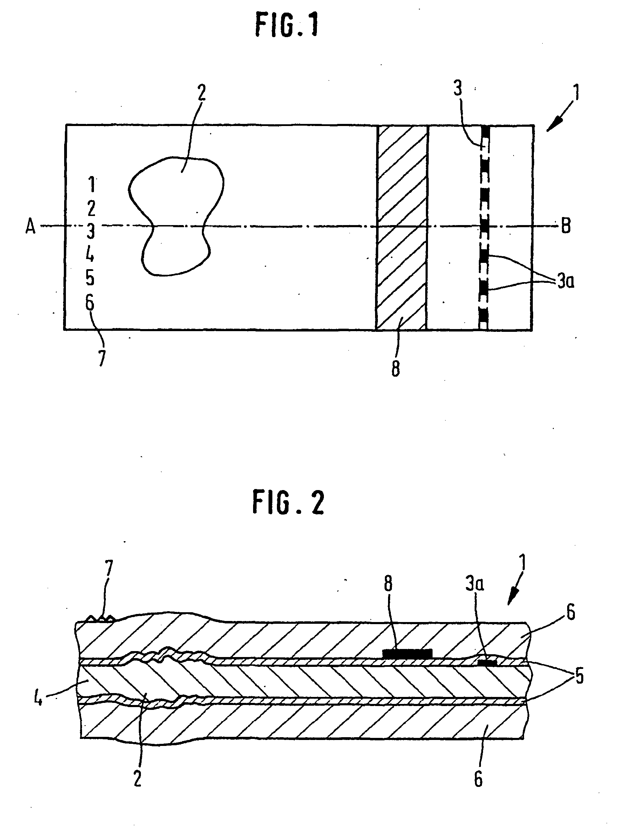

Fig.1 zeigt ein erfindungsgemäßes Wertdokument 1, wie beispielsweise eine Banknote. Die Papierschicht wird üblicherweise aus Baumwollfasern oder anderen Fasern von Einjahrespflanzen hergestellt. Für manche Anwendungen kann es jedoch auch sinnvoll sein, einen Teil dieser natürlichen Fasern durch Kunststofffasern, insbesondere Polyamidfasern zu ersetzen. Aber auch reine Kunststofffaserpapiere sind denkbar. Während der Herstellung der Papierschicht werden bereits einzelne Sicherheitselemente in das Papier eingebettet, wie beispielsweise ein Portrait-Wasserzeichen 2 und ein Fenstersicherheitsfaden 3. Dieser Sicherheitsfaden 3 wird quasi in das Papier eingewebt, so dass er in den Bereichen 3a direkt an die Oberfläche des Papiers tritt, während er in den strichliert gezeichneten Bereichen vollständig in die Papiermasse eingebettet ist. Dieser Faden 3 kann mit beliebigen Sicherheitsmerkmalen, wie einer elektrisch leitenden, metallischen Schicht, einem Hologramm oder dergleichen, versehen sein. Die Papierschicht ist beidseitig mit Folie abgedeckt, wobei auf einer Seite und zwar auf der innen liegenden Seite der Folie ein Hologrammstreifen 8 aufgebracht ist. Auf der außen liegenden Seite der Folie wurde in Stahlstichtiefdruck eine üblicherweise beim Banknotendruck verwendete Zahlenreihe aufgedruckt.

Fig. 2 zeigt einen Schnitt durch das erfindungsgemäße Sicherheitspapier 1 entlang der strichpunktierten Linie A - B in Fig.1. Das erfindungsgemäße Sicherheitspapier 1 besteht aus Baumwollpapier 4 und der erfindungsgemäßen Folienbeschichtung 6, die gemäß der gezeigten Ausführungsform vollflächig auf eine Oberfläche des Sicherheitspapiers 1 mittels Nasskleber 5 aufkaschiert wurde. Die Folie wurde vor dem Aufkaschieren mit einem Holgrammstreifen 8 ausgestattet. Die Folie wurde dabei so aufkaschiert, dass der Streifen 8 im Innern des Substratverbundes zu liegen kommt. Auf das fertig kaschierte Substrat wurde in einem letzten Schritt der Aufdruck 7 im Stichtiefdruckverfahren aufgedruckt.

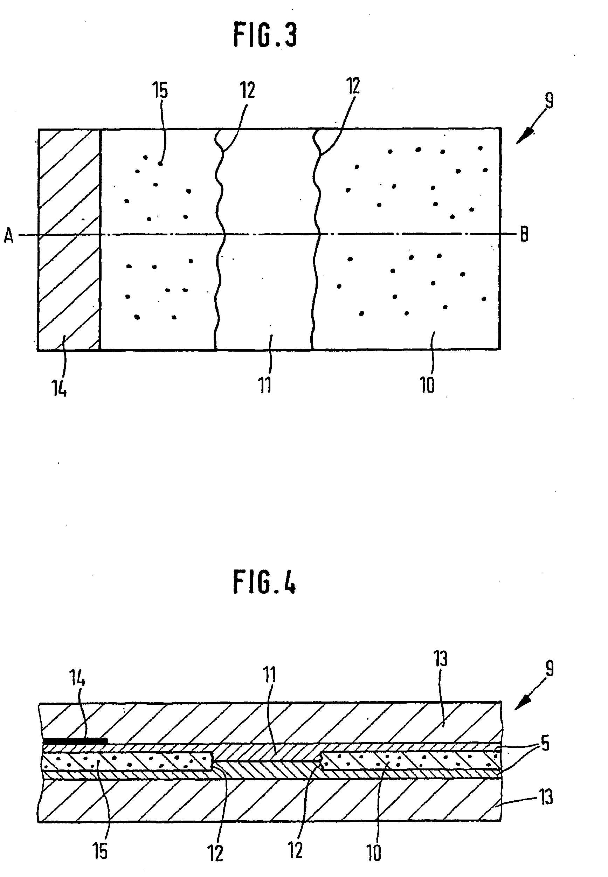

Die Fig. 3 und 4 zeigen eine Ausführungsform eines erfindungsgemäßen Sicherheitspapiers 9. In Fig. 4 ist ein Schnitt durch dieses erfindungsgemäße Sicherheitspapier 9 entlang der in Fig. 3 strichpunktiert gezeichneten Linie A - B dargestellt.

Wie in Fig. 4 gezeigt, besteht das Sicherheitspapier 9 aus einer geteilten Papierbahn 10, deren Ränder 12 vorzugsweise als Büttenränder ausgestaltet sind. Auf die Papierbahn wurden beiderseits mittels Kaltkaschieren und wasservernetzendem Kleber 5 Folien 13 aufgebracht. Im Bereich 11 liegt keine Papierschicht vor, sondern lediglich der Kleber 5 und die Folien 13. Eine Folienlage ist auf einer Seite mit einem hochreflektierenden Metallstreifen 14 ausgestattet. Zusätzlich befindet sich im Volumen des Papiers ein Merkmalsstoff 15, der visuell aber auch maschinell überprüft werden kann. Bei dem Merkmalsstoff kann es sich beispielsweise um einen unter normaler Beleuchtung transparenten Lumineszenzstoff handeln, der bei Bestrahlung mit UV-Licht im visuellen Spektralbereich emittiert und somit einen intensiven Farbton zeigt.

Es können allerdings auch mehrere Merkmalsstoffe vorgesehen werden, die einzeln nachweisbar sind. Hierbei kann über das Mischungsverhältnis der Merkmalsstoffe eine zusätzliche Codierung erzeugt werden.

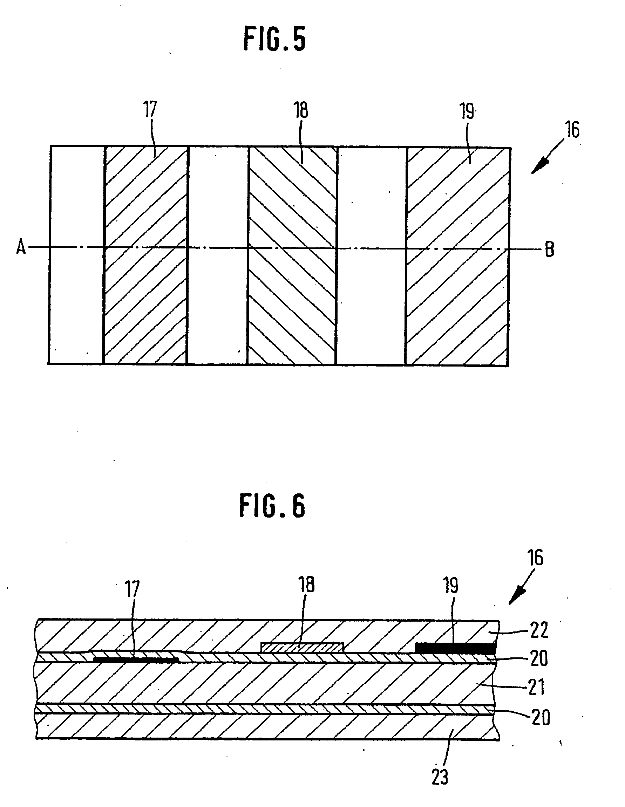

Die Fig. 5 und 6 zeigen eine weitere Ausführungsform eines erfindungsgemäßen Sicherheitspapiers 16. In Fig. 6 ist ein Schnitt durch dieses erfindungsgemäße Sicherheitspapier 16 entlang der in Fig. 5 strichpunktiert gezeichneten Linie A - B dargestellt.

Fig.5 zeigt in Aufsicht drei breite Streifen 17,18,19, die ein jeweils unterschiedliches optisches Erscheinungsbild aufweisen und in unterschiedlichen Schichten des Substrates eingebracht sind.

Fig. 6 zeigt den Querschnitt des Sicherheitspapiers 16. Die Papierschicht 21 ist hierbei konventionell mit Stahlstichtiefdruck in Form des Streifens 17 bedruckt. Darüber wurde eine transparente Kleberschicht 20 aufgetragen. Im Bereich 18 wurde eine zweite allerdings gefärbte Kleberschicht aufgetragen, die den Streifen 18 ergibt. Die Kleberschichten 18, 20 sind wiederum mit einer Folie 22 abgedeckt, auf deren Innenseite sich ein Hologrämmstreifen 19 befindet. Auf der Rückseite wurde mittels des transparenten Klebers 20 eine weitere Folie 23 aufkaschiert.

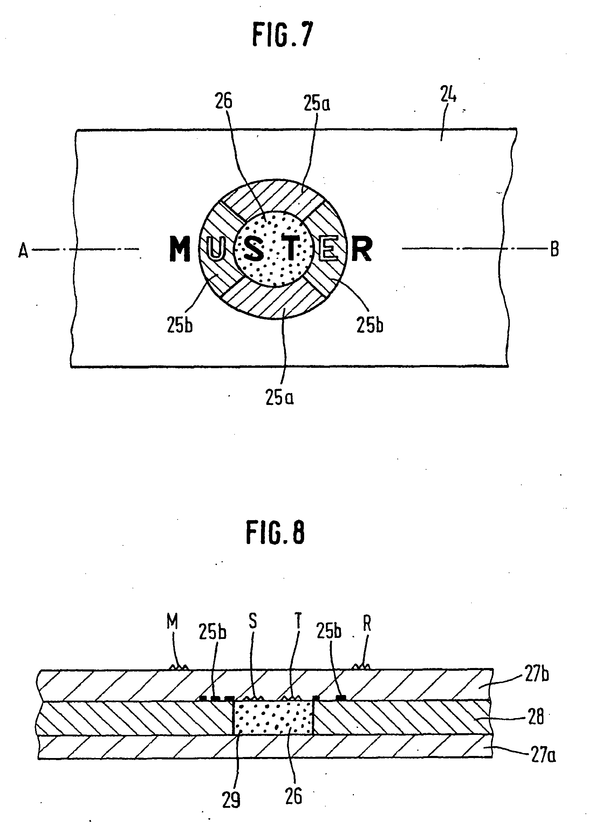

Fig. 7 zeigt einen Ausschnitt aus einem erfindungsgemäßen Sicherheitspapier 24, wobei unterschiedliche Sicherheitsmerkmale in verschiedenen Schichten registerhaltig angeordnet sind und sich zu der Gesamtinformation "MUSTER" in Kombination mit einem zweifarbig metallischen Kreisring ergeben. Der Kreisring ist in vier Segmente aufgeteilt, wobei die Segmente 25a goldfarben und die Segmente 25b silberfarben ausgestaltet sind. Die Gold- und Silberfarbe wird beispielsweise durch eine Vakuumbedampfung mit Kupfer und Aluminium erreicht. Zusätzlich wurden in die Segmente 25b Aussparungen in die Metallschicht eingearbeitet, nämlich zum einen der Buchstabe "U", zum anderen der Buchstabe "E". Die Buchstaben "M", "S", "T" und "R" wurden mittels Stichtiefdruck appliziert, wobei "S" und "T" auf die Papieroberfläche und "M" und "R" auf die außen liegende Folienoberfläche aufgedruckt sind. Im Bereich 26 befindet sich ein in das Papiervolumen eingebrachter, mit UV-Licht anregbarer und im sichtbaren Licht fluoreszierender Lumineszenzstoff.

Fig. 8 zeigt den in Fig. 7 gezeigten Ausschnitt des erfindungsgemäßen Sicherheitspapiers 24 im Querschnitt. Das Sicherheitspapier setzt sich aus einer Papierschicht 28 und zwei Folienschichten 27a, 27b, die jeweils auf einer Seite der Papierschicht auflaminiert sind, zusammen. In die Papierschicht 28 ist in dem kreisförmigen Bereich 26 Lumineszenzstoff 29 eingebracht worden. Auf die Papierschicht wurden im Stichtiefdruckverfahren die Buchstaben "S" und "T" gedruckt, wobei sich diese über dem Bereich 26 befinden. Die Folie 27b ist ebenfalls mit Sicherheitsmerkmalen ausgestattet. Auf der im Inneren des Schichtverbandes zu liegen kommenden Seite wurde die Folie mit einer gold- und silberfarbenen Metallisierung, z.B. aus Aluminium und Kupfer, in Form eines segmentierten Kreisringes ausgestaltet. In die silberfarbenen Bereich 25b wurden Aussparungen in Form der Buchstaben "U" und "E" eingearbeitet. Auf die außen liegenden Oberflächen der Folie 27b wurden im Stichtiefdruckverfahren die Buchstaben "M" und "R" aufgedruckt.

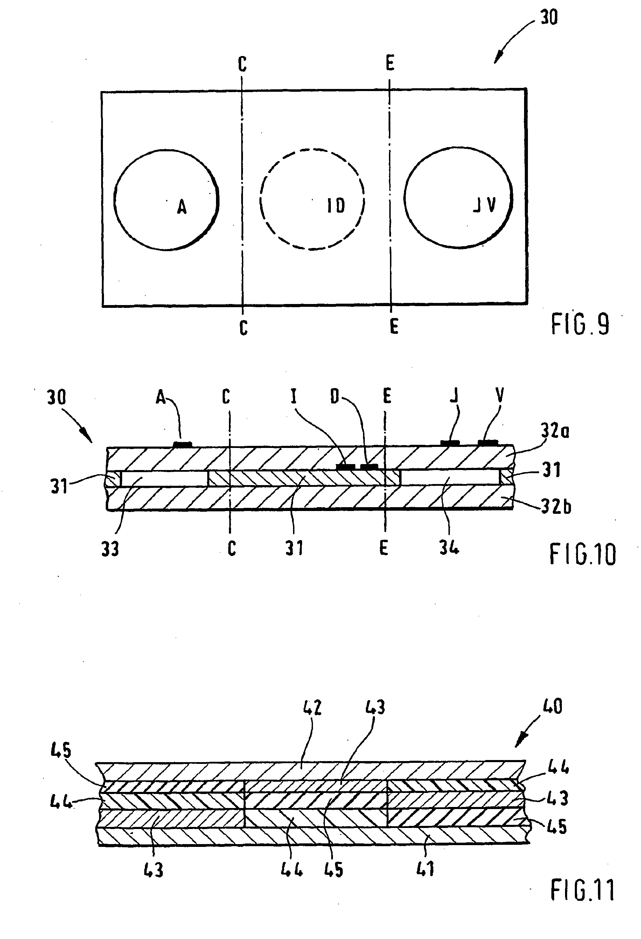

Fig. 9 zeigt ein erfindungsgemäßes Sicherheitspapier 30 in Aufsicht. Das Sicherheitspapier setzt sich aus einer Papierschicht 31 und zwei Folienschichten 32a, 32b, die jeweils auf einer Seite der Papierschicht auflaminiert sind, zusammen.

Fig. 10 zeigt das in Fig. 9 dargestellte Sicherheitspapier 30 im Querschnitt. Die Folien 32a und 32b sind hierbei vollflächig und transparent ausgeführt. Die Papierschicht 31 weist zwei Aussparungen 33,34 in Form von Kreisen auf. Selbstverständlich ist jede andere Form auch denkbar. Des Weiteren ist die Folie 32a mit den Buchstaben "A", "L" und "V" bedruckt, die in Aufsicht gemäß Fig. 9 spiegelbildlich erscheinen. In etwa der Mitte des Sicherheitspapiers sind die Buchstaben "I" und "D" auf die Papierschicht 31 aufgedruckt. Faltet man das Sicherheitspapier entlang der punkt-gestrichelten Linien C - C und E - E so, dass das linke und rechte Drittel des Sicherheitspapiers nach oben geklappt und übereinander zu liegen kommen, so ergänzen sich die aufgedruckten Buchstaben zum Schriftbild "VALID". Der Einfachtheit halber sind die übereinander zu legenden Felder in Fig. 9 mit Kreisen (durchgezogene Linie bzw. strichlierte Linie) markiert. Selbstverständlich können die sich ergänzenden Aufdrucke auch komplexerer Natur sein bzw. bei entsprechender Ausgestaltung Moiréeffekte und Ähnliches erzeugen.

Fig.11 zeigt ein Sicherheitspapier 40 im Querschnitt. Das Sicherheitspapier besteht aus einer Papierschicht 41 und - abweichend von der vorliegenden Erfindung - nur einer Folie 42, die mit drei unterschiedlichen Klebern 43, 44, 45 zusammenkaschiert werden. Die Kleber können unterschiedliche Farbe aufweisen oder von unterschiedlichem Typ sein. In der vorliegenden Variante weisen die Kleber 43, 44, 45 unterschiedliche Haftungseigenschaften untereinander auf, so dass gezielt Sollbruchstellen in den Verbund eingearbeitet werden können und Manipulationen aufgrund irreversibler Änderungen leicht erkennbar sind. Denkbar ist auch der Einsatz von Klebern mit unterschiedlichen Brechungsindices, so dass z.B. im Bereich eines Wasserzeichens einzelne Konturen gezielt betont oder abgeschwächt werden können.

## Patentansprüche

1. Sicherheitspapier zur Herstellung von Wertdokumenten, wie Banknoten, Schecks oder dergleichen, bestehend aus einem knitterbaren, mehrschichtigen Substrat, das aus einer Papierschicht besteht, die beidseitig vollflächig mit Folie beschichtet ist, wobei zumindest die Folie eine Dicke von 1 bis 15 µm aufweist und mit wenigstens einem Sicherheitsmerkmal ausgestattet ist.

2. Sicherheitspapier nach Anspruch 1, **dadurch gekennzeichnet, dass** die Papierschicht unterbrochen ist.

3. Sicherheitspapier nach Anspruch 1 oder 2, **dadurch gekennzeichnet, dass** das Sicherheitsmerkmal der Folie ausgewählt ist aus einem Druckbild, Beugungsstrukturen, einer Metallisierung, Lumineszenzstoffen, Dünnschichtelementen, Flüssigkristallen, Magnetpigmenten, thermochromen Stoffen, photochromen Stoffen und Farbstoffen.

4. Sicherheitspapier nach wenigstens einem der Ansprüche 1 bis 3, **dadurch gekennzeichnet, dass** das Sicherheitsmerkmal ein im Stichtiefdruck ausgeführtes Druckbild ist.

5. Sicherheitspapier nach wenigstens einem der Ansprüche 1 bis 4, **dadurch gekennzeichnet, dass** bei mehreren Folien diese eine unterschiedliche Reckung aufweisen.

6. Sicherheitspapier nach wenigstens einem der Ansprüche 1 bis 5, **dadurch gekennzeichnet, dass** das Sicherheitspapier aus Fasern von Einjahrespflanzen, insbesondere Baumwollfasern besteht.

7. Sicherheitspapier nach wenigstens einem der Ansprüche 1 bis 6, **dadurch gekennzeichnet, dass** das Sicherheitspapier zumindest teilweise aus Kunststofffasern, vorzugsweise Polyamidfasern besteht.

8. Sicherheitspapier nach wenigstens einem der Ansprüche 1 bis 7, **dadurch gekennzeichnet**, die Papierlage zumindest mit einem Sicherheitsmerkmal ausgestattet ist.

9. Sicherheitspapier nach wenigstens einem der Ansprüche 1 bis 8, **dadurch gekennzeichnet, dass** das Sicherheitsmerkmal in der Papierlage ein Wasserzeichen ist.

10. Sicherheitspapier nach wenigstens einem der Ansprüche 1 bis 8, **dadurch gekennzeichnet, dass** das Sicherheitsmerkmal der Papierschicht ausgewählt ist aus einem Sicherheitsfaden, Druckbild, Beugungsstrukturen, einer Metallisierung, Lumineszenzstoffen, Dünnschichtelementen, Flüssigkristallen, Magnetpigmenten, thermochromen Stoffen, photochromen Stoffen und Farbstoffen.

11. Sicherheitspapier nach wenigstens einem der Ansprüche 1 bis 10, **dadurch gekennzeichnet, dass** die Sicherheitsmerkmale der Papierschicht, der Folie und/oder weiterer Schichten registerhaltig auf bzw. eingebracht sind.

12. Sicherheitspapier nach wenigstens einem der Ansprüche 1 bis 11, **dadurch gekennzeichnet, dass** die Sicherheitsmerkmale der Papierlage, der Folie und/ oder weiterer Schichten so auf- bzw. eingebracht sind, dass sie sich zu einer Gesamtinformation ergänzen.

13. Wertdokument, wie eine Banknote, Scheck oder dergleichen, **dadurch gekennzeichnet, dass** das Wertdokument ein knitterbares Substrat gemäß wenigstens einem der Ansprüche 1 bis 12 aufweist.

14. Verfahren zur Herstellung eines knitterbaren Sicherheitspapieres nach wenigstens einem der Ansprüche 1 bis 12, **dadurch gekennzeichnet, dass**
a) in einer Papiermaschine eine Papierschicht hergestellt wird und
b) anschließend Folie auf beide Oberflächen der Papierschicht vollflächig aufgebracht wird, wobei die Folie eine Dicke von 1 bis 15 µm aufweist und mit wenigstens einem Sicherheitsmerkmal ausgestattet ist oder nach dem Aufbringen ausgestattet wird.

15. Verfahren nach Anspruch 14, **dadurch gekennzeichnet, dass** die Folie nach dem Aufbringen bedruckt wird.

16. Verfahren nach Anspruch 15, **dadurch gekennzeichnet, dass** es sich bei dem Druckverfahren um Stichtiefdruck handelt.

17. Verfahren nach wenigstens einem der Ansprüche 14 bis 16, **dadurch gekennzeichnet, dass** die Folie auf die Papierschicht kaltkaschiert wird.

18. Verfahren nach Anspruch 17, **dadurch gekennzeichnet, dass** beim Kaltkaschieren ein wasserlöslicher Kaschierkleber verwendet wird.

19. Verfahren nach wenigstens einem der Ansprüche 14 bis 16, **dadurch gekennzeichnet, dass** die Folie auf die Papierschicht extrudiert wird.

## Claims

1. A security paper for producing value documents, such as bank notes, checks or the like, consisting of a creasable, multilayer substrate which consists of a paper layer coated with film on both sides over the entire surface, wherein at least the film has a thickness of 1 to 15 µm and is equipped with at least one security feature.

2. The security paper according to claim 1, **characterized in that** the paper layer is interrupted.

3. The security paper according to claim 1 or 2, **characterized in that** the security feature of the film is selected from a printed image, diffraction structures, a metallization, luminescent substances, thin-film elements, liquid crystals, magnetic pigments, thermochromic substances, photochromic substances and dyes.

4. The security paper according to at least one of claims 1 to 3, **characterized in that** the security feature is a printed image executed by intaglio printing.

5. The security paper according to at least one of claims 1 to 4, **characterized in that** in the case of a plurality of films, they have different stretch.

6. The security paper according to at least one of claims 1 to 5, **characterized in that** the security paper consists of annual plant fibers, in particular cotton fibers.

7. The security paper according to at least one of claims 1 to 6, **characterized in that** the security paper consists at least partly of plastic fibers, preferably polyamide fibers.

8. The security paper according to at least one of claims 1 to 7, **characterized in that** the paper ply is equipped at least with a security feature.

9. The security paper according to at least one of claims 1 to 8, **characterized in that** the security feature in the paper ply is a watermark.

10. The security paper according to at least one of claims 1 to 8, **characterized in that** the security feature of the paper layer is selected from a security thread, printed image, diffraction structures, a metallization, luminescent substances, thin-film elements, liquid crystals, magnetic pigments, thermochromic substances, photochromic substances and dyes.

11. The security paper according to at least one of claims 1 to 10, **characterized in that** the security features of the paper layer, the film and/or further layers are applied or incorporated in register.

12. The security paper according to at least one of claims 1 to 11, **characterized in that** the security features of the paper ply, the film and/or further layers are applied or incorporated such that they complement each other to form total information.

13. A value document such as a bank note, check or the like, **characterized in that** the value document has a creasable substrate according to at least one of claims 1 to 12.

14. A method for producing a creasable security paper according to at least one of claims 1 to 12, **characterized in that**
a) a paper layer is produced in a paper machine, and
b) then film is applied to both surfaces of the paper layer over the entire surface, the film having a thickness of 1 to 15 µm and being already equipped with at least one security feature or equipped therewith after application.

15. The method according to claim 14, **characterized in that** the film is printed after application.

16. The method according to claim 15, **characterized in that** the printing process is intaglio printing.

17. The method according to at least one of claims 14 to 16, **characterized in that** the film is cold-laminated on the paper layer.

18. The method according to claim 17, **characterized in that** a water-soluble laminating adhesive is used in cold lamination.

19. The method according to at least one of claims 14 to 16, **characterized in that** the film is extruded onto the paper layer.

## Revendications

1. Papier de sûreté conçu pour fabriquer des documents de valeur tels que billets de banque, chèques ou papiers similaires, composé d'un substrat froissable multicouche composé d'une couche de papier dont les deux côtés sont recouverts d'un film sur toute leur surface, au moins le film présentant une épaisseur de 1 à 15 µm et étant pourvu d'au moins une caractéristique de sécurité.

2. Papier de sûreté selon la revendication 1, **caractérisé en ce que** la couche de papier est discontinue.

3. Papier de sûreté selon la revendication 1 ou 2, **caractérisé en ce que** la caractéristique de sécurité du film est choisie parmi une image imprimée, des structures de diffraction, une métallisation, des matières luminescentes, des éléments en couche mince, des cristaux liquides, des pigments magnétiques, des matières thermochromiques, des matières photochromiques et des colorants.

4. Papier de sûreté selon au moins une des revendications de 1 à 3, **caractérisé en ce que** la caractéristique de sécurité est une image imprimée exécutée par gravure en taille-douce.

5. Papier de sûreté selon au moins une des revendications de 1 à 4, **caractérisé en ce que**, dans le cas de plusieurs films, ces derniers présentent un étirement différent.

6. Papier de sûreté selon au moins une des revendications de 1 à 5, **caractérisé en ce que** le papier de sûreté est constitué de fibres de plantes annuelles, notamment de fibres de coton.

7. Papier de sûreté selon au moins une des revendications de 1 à 6, **caractérisé en ce que** le papier de sûreté est constitué au moins partiellement de fibres synthétiques étant de préférence des fibres de polyamide.

8. Papier de sûreté selon au moins une des revendications de 1 à 7, **caractérisé en ce que** la couche de papier est pourvue d'au moins une caractéristique de sécurité.

9. Papier de sûreté selon au moins une des revendications de 1 à 8, **caractérisé en ce que** la caractéristique de sécurité située dans la couche de papier est un filigrane.

10. Papier de sûreté selon au moins une des revendications de 1 à 8, **caractérisé en ce que** la caractéristique de sécurité de la couche de papier est choisi parmi un fil de sécurité, une image imprimée, des structures de diffraction, une métallisation, des matières luminescentes, des éléments en couche mince, des cristaux liquides, des pigments magnétiques, des matières thermochromiques, des matières photochromiques et des colorants.

11. Papier de sûreté selon au moins une des revendications de 1 à 10, **caractérisé en ce que** les caractéristiques de sécurité de la couche de papier, du film et/ou d'autres couches sont placées ou insérées par alignement en registre.

12. Papier de sûreté selon au moins une des revendications de 1 à 11, **caractérisé en ce que** les caractéristiques de sécurité de la couche de papier, du film et/ou d'autres couches sont placées ou insérées de manière à ce qu'elles se complètent en formant ensemble une information globale.

13. Document de valeur tel que billet de banque, chèque ou autre papier similaire, **caractérisé en ce que** le document de valeur présente un substrat froissable selon au moins une des revendications de 1 à 12.

14. Procédé de fabrication d'un papier de sûreté froissable selon au moins une des revendications de 1 à 12, **caractérisé en ce que**
a) une couche de papier est fabriquée dans une machine à papier et
b) les deux surfaces de la couche de papier sont ensuite recouvertes de film sur toute leur surface, le film présentant une épaisseur de 1 à 15 µm et étant pourvu d'au moins une caractéristique de sécurité ou bien en étant pourvu une fois placé sur le papier.

15. Procédé selon la revendication 14, **caractérisé en ce que** le film est imprimé une fois placé.

16. Procédé selon la revendication 15, **caractérisé en ce que** le procédé d'impression consiste en de la gravure en taille-douce.

17. Procédé selon au moins une des revendications de 14 à 16, **caractérisé en ce que** le film est contrecollé à froid sur la couche de papier.

18. Procédé selon la revendication 17, **caractérisé en ce qu'**une colle à doubler hydrosoluble est utilisée lors du contrecollage à froid.

19. Procédé selon au moins une des revendications de 14 à 16, **caractérisé en ce que** le film est extrudé sur la couche de papier.
